(19) Europäisches Patentamt
European Patent Office
Office européen des brevets

(11) Numéro de publication: **0 075 247**
**B1**

(12) **FASCICULE DE BREVET EUROPEEN**

(45) Date de publication du fascicule du brevet: **31.07.85**

(51) Int. Cl.⁴: **H 04 Q 11/04**, H 04 Q 3/54

(21) Numéro de dépôt: **82108458.9**

(22) Date de dépôt: **14.09.82**

(54) **Groupe d'unités de terminaux pour autocommutateur numérique.**

(30) Priorité: **18.09.81 FR 8117645**

(43) Date de publication de la demande:
**30.03.83 Bulletin 83/13**

(45) Mention de la délivrance du brevet:
**31.07.85 Bulletin 85/31**

(84) Etats contractants désignés:
**BE CH DE FR GB IT LI NL SE**

(56) Documents cités:
**EP - A - 0 016 426**
**EP - A - 0 034 336**
**EP - A - 0 043 320**
**EP - A - 0 062 295**
**EP - A - 0 062 296**
**EP - A - 0 075 248**

**IEE FOURTH INTERNATIONAL CONFERENCE ON SOFTWARE ENGINEERING FOR TELECOMMUNICATION SWITCHING SYSTEMS, juillet 1981, pages 124-129, Warwynck (GB); M. MAISONNEUVE et al.: "E10S operating system for a distributed architecture"**
**INTERNATIONAL SWITCHING SYMPOSIUM, 11 mai 1979, pages 608-614, Paris (FR); ANCEAU et al.: "Projet d'architecture pour la commande d'un autocommutateur téléphonique"**
**INTERNATIONAL CONFERENCE ON COMMUNICATIONS, 8-12 juin 1980, pages 46.3.1-46.3.7, Seattle (USA); CHEA et al.: "Circuit terminations and terminal control"**

(73) Titulaire: **COMPAGNIE INDUSTRIELLE DES TELECOMMUNICATIONS CIT-ALCATEL S.A. dite:, 12, rue de la Baume, F-75008 Paris (FR)**

(72) Inventeur: **Dupuis, Bernard, 13, allée J.B. Lulli, F-78190 Montigny le Bretonneux (FR)**
Inventeur: **Behague, François, 9, allée du Bocage de Beaudreville, F-91190 Gif sur Yvette (FR)**

(74) Mandataire: **Weinmiller, Jürgen et al, Zeppelinstrasse 63, D-8000 München 80 (DE)**

(56) Documents cités: (suite)
**INTERNATIONAL SWITCHING SYMPOSIUM, 25-29 octobre 1976, pages 423.3.1-423.3.8, Kyoto (JP); WUHRMANN: "Corrective maintenance in the integrated PCM telecommunications system IFS-1"**
**TELCOM REPORT, vol. 4, 1981 "Beiheft: Digitalvermittlungssystem EWSD", pages 19-27, Münich (DE); BORGER et al.: "Periphere Anschlussgruppen im system EWSD"**
**INTERNATIONAL CONFERENCE ON COMMUNICATIONS, vol. 2, 4-7 juin 1978, pages 32.3.1-32.3.6, Toronto (CA); Terry et al.: "Dms-200 traffic peripherals"**
**COMMUTATION & TRANSMISSION, vol. 3, no. 3, septembre 1981, pages 99-112, Paris (FR); BALLARD et al.: "Le programme E 10.S-TSS.5"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**EP 0 075 247 B1**

**Description**

L'invention concerne un groupe d'unités de terminaux pour autocommutateur numérique. Elle est applicable dans les industries des télécommunications, notamment en commutation téléphonique et en commutation de services télématiques.

On connait de nombreux types de groupes d'organes téléphoniques comportant une logique de commande, par exemple un microprocesseur, effectuant localement un certain nombre de tâches et réalisant les échanges avec les unités de commande principale de l'autocommutateur.

Ces groupes ont été réalisés pour répondre à divers objectifs: groupes physiquement indépendants pour une implantation distante, modularité, déchargement de la commande centrale de fonctions répétitives, etc...

En particulier, un grand nombre d'applications récentes concernent la réalisation de groupes de terminaux pour des systèmes dans lesquels la commande principale est elle-même répartie.

On connait les avantages de ce type de commande, principalement la modularité et la souplesse de mise en oeuvre. Un tel système est décrit par exemple dans l'article de SHIMASAKI intitulé: »A versatile digital switching system for central office NEAX 61« (Proceedings du colloque ISS-79 de Paris, tome 2 pages 688 à 695).

Un autre système à commande répartie est décrit dans le document EP 62 296 A1, qui a été publié après la date de dépôt de la présente demande. Dans ce système, la commande principale est répartie, pour ce qui concerne la commande des unités terminales, dans des unités de commande banalisées.

Un intérêt important de ces systèmes est de grouper dans différentes unités de terminaux tous les équipements téléphoniques des systèmes: lignes circuits, équipements de signalisation, etc...

Cependant, les systèmes connus présentent deux inconvénients liés à la commande et aux moyens de raccordement des unités terminales et qui réduisent les avantages de la commande répartie.

D'une part les unités de terminaux sont de natures et de volumes très divers et l'utilisation d'une interface de commande identique pour toutes est pénalisante.

D'autre part, pour leur raccordement, les unités de terminaux sont réparties en groupes qui ne sont pas les entités fonctionnelles et qui font perdre des avantages de souplesse en particulier pour la défense.

Le but de l'invention est de réaliser des groupes d'unités de terminaux qui, tout en conservant la notion d'unités indépendantes, utilise une interface globale et des moyens de raccordement partagés, le groupe formant un ensemble fonctionnel.

L'objet de l'invention est un groupe d'unités de terminaux dans un autocommutateur temporel comportant un réseau de connexion formé de quatre plans indépendants constitués de commutateurs temporels pilotés par des marqueurs, des unités de terminaux organisées en groupes reliés au réseau de connexion, chaque unité de terminaux comportant un microprocesseur et des terminaux constitués chacun par un des équipements spécifiques de l'autocommutateur — notamment pour un autocommutateur téléphonique: équipement d'abonné, de circuit, de signalisation, d'essais — des unités de commande reliées au réseau de connexion effectuant la commande et la gestion des unités de terminaux, et des modules de distribution de signaux de synchronisation et d'horloge, caractérisé par le fait que chaque groupe comporte deux circuits d'horloge et de synchronisation formés chacun par une base de temps reliée à un module de distribution, par un premier et un deuxième circuits de synchronisation reliés chacun à un plan du réseau de connexion par une liaison sortante et aux unités de terminaux par une liaison terminale entrante, et par un troisième et un quatrième circuits de synchronisation reliés chacun par un liaison entrante à chacun des plans auxquels sont reliés les premier et deuxième circuits de synchronisation et par une liaison terminale sortante aux unités de terminaux, et que la commande d'une unité de terminaux par une unité de commande est réalisée par échange de message entre le microprocesseur de l'unité de terminaux et l'unité de commande, cet échange de messages se faisant à travers le réseau de connexion en procédure sémaphore sur une voie temporelle desdites liaisons entrantes et sortantes et desdites liaisons terminales entrantes et sortantes.

L'application décrite à titre d'exemple concerne un autocommutateur téléphonique. Les figures annexées représentent:

Figure 1: le diagramme général de l'autocommutateur

Figure 2: le diagramme d'une unité de commande banalisée

Figure 3: le schéma d'un module de distribution d'horloge

Figure 4: le schéma d'un circuit de base de temps

Figure 5: le diagramme général des liaisons de commande entre unités de commandes banalisées et unités de terminaux

Figure 6: le schéma de principe commun des unités de terminaux

Figure 7: le schéma de principe d'une unité de terminaux d'équipements d'abonnés

Figure 8: le schéma de principe d'une unité de terminaux de générateur et récepteur de signalisation multifréquence

Figures 9—10 et 13: le diagramme de fonctionnement de l'interface de commande côté unité de terminaux.

Figures 11 – 12: le diagramme de fonctionnement de l'interface de commande côté de commande banalisées.

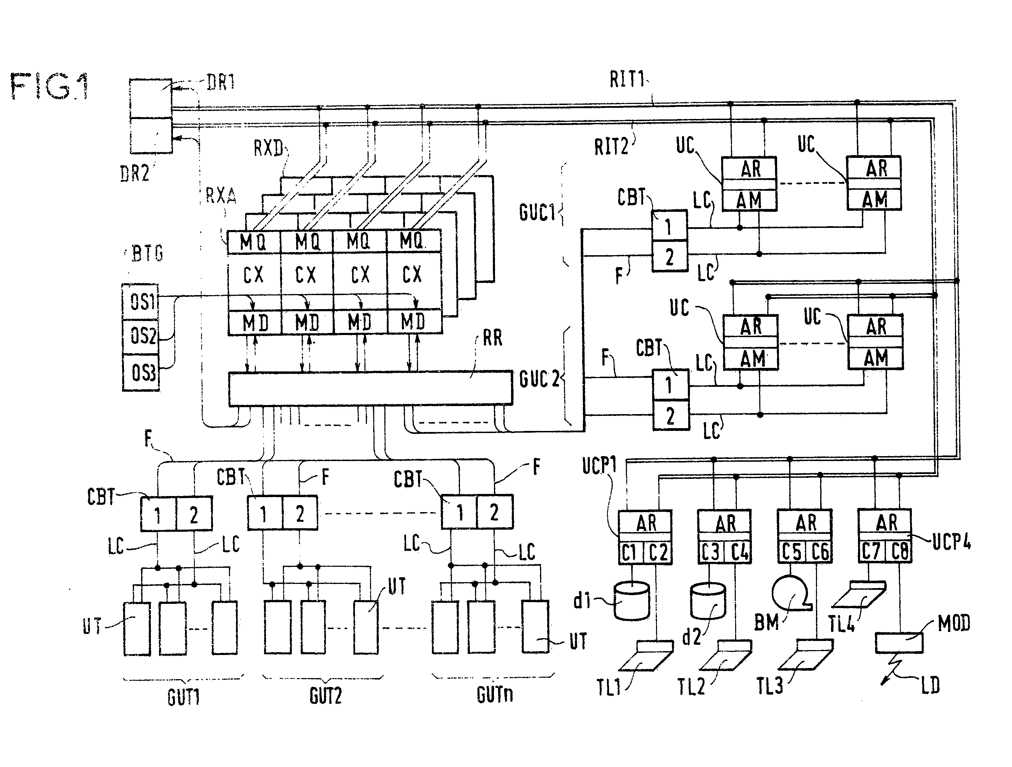

L'autocommutateur à réseau de connexion temporel représenté de manière simplifiée à la figure 1 comporte les organes suivants:

- Des groupes d'unités de terminaux GUT1 à GUTn comportant des unités UT de terminaux d'abonnés, de circuits analogiques et numériques, de terminaux auxiliares de signalisation, d'émission de tonalités et de films parlants, d'essais de lignes d'abonnés et de circuits, de circuits de conférence, etc . . .
- Un réseau de connexion central à un seul étage de commutation, organisé en plans indépendants, par exemple quatre plans RXA à RXD. Les chiffres donnés ici et dans la suite sont des simples exemples destinés à préciser un mode de réalisation ou à simplifier la représentation.
- Un ensemble de commande à architecture répartie formé de groupes d'unités de commande GUC1, GUC2 constitués chacun d'unité de commandes UC identiques, comportant chacune un microprocesseur. Ces unités de commande sont banalisées. L'ensemble de commande comporte aussi une ou plusieurs unités de commande de périphériques UCP1 à UCP4: ces unités peuvent être identiques aux précédentes, mais elles ne sont pas banalisées complètement du fait qu'elles comportent des coupleurs C1 à C8 de liaison avec les périphériques (disques d1, d2; terminaux de dialogue TL1 à TL4; des dérouleurs de bande magnétique BM; liaisons de données LD par l'intermédiaire de modems MOD).

Les liaisons qui interconnectent ces trois ensembles sont les suivantes:

- Les unités de terminaux UT sont reliées à chaque plan RXA à RXD du réseau de connexion par une liaison multiplex duplex, par exemple une liaison multiplex à 32 voies de 8 e. b. Il y a donc quatre liaisons multiplex et les unités de terminaux d'un même groupe sont reliées en parallèle aux quatre liaisons multiplex.
- Les unités de commande UC sont également reliées au réseau de connexion par des liaisons multiplex, à raison d'une liaison par groupe de commande GUC vers chaque plan. Les messages échangés entre unités de commande UC et unité de terminaux UT empruntent des vois temporelles de liaisons multiplex, reliées par le réseau de connexion d'une manière semi-permanente et reconfigurable. On réalise ainsi des canaux de transmission de données d'un débit de 64 keb/s qui sont utilisés suivant une procédure du type HDLC, definie par le CCITT.
- Les unités de commande UC et de commande de périphériques UCP sont reliées entre elles par une liaison point à point, doublée pour des raisons de sécurité RIT1, RIT2. Il s'agit d'une liaison série utilisant également une procédure HDLC. L'accès à la liaison est géré par un distributeur DR1, DR2 respectivement qui délivre les autorisations d'émission et supervise la durée d'utilisation.

Chaque liaison RIT1 et RIT2 comporte cinq paires de fils vers chaque station raccordée, assurant les fonctions d'appel, d'autorisation d'accès, d'horloge, d'émission et de réception. Sur chaque paire les signaux sont transmis en mode bipolaire.

Chaque plan RXA et RXD du réseau de connexion central comporte par exemple quatre commutateurs temporels associés chacun à un marqueur MQ et à un module de distribution de signaux MD; chaque marqueur comporte un microprocesseur, et les marqueurs sont pilotés par les unités de commande UC également par l'intermédiaire des liaisons point à point RIT1, RIT2.

Toutes les unités citées plus haut UT, UC, UCP, MQ disposent d'un circuit d'émission/réception de message de type HDLC, par exemple de circuits de type MC 6854 de la société MOTOROLA ou 8273 de la société INTEL.

Des coupleurs AR permettent l'accès des unités de commande UC et des unités de commande de périphériques UCP et des coupleurs AM permettant l'accès des unités de commande UC aux canaux MIC. Les coupleurs AM et AR permettent un accès en mode sémaphore, et sont par exemple du type décrit dans la demande de brevet français déjè citée de la demanderesse.

Les unités de terminaux comportent un mini-réseau de connexion permettant de relier les terminaux aux liaisons multiplex vers le réseau principal. Elles sont pilotées par un microprocessor qui peut dialoguer avec les Unités de Commande UC à l'aide d'un circuit HDLC, par exemple l'un des circuits cités ci-dessus. Des groupes d'unités de terminaux suivant l'invention sont décrits plus loin.

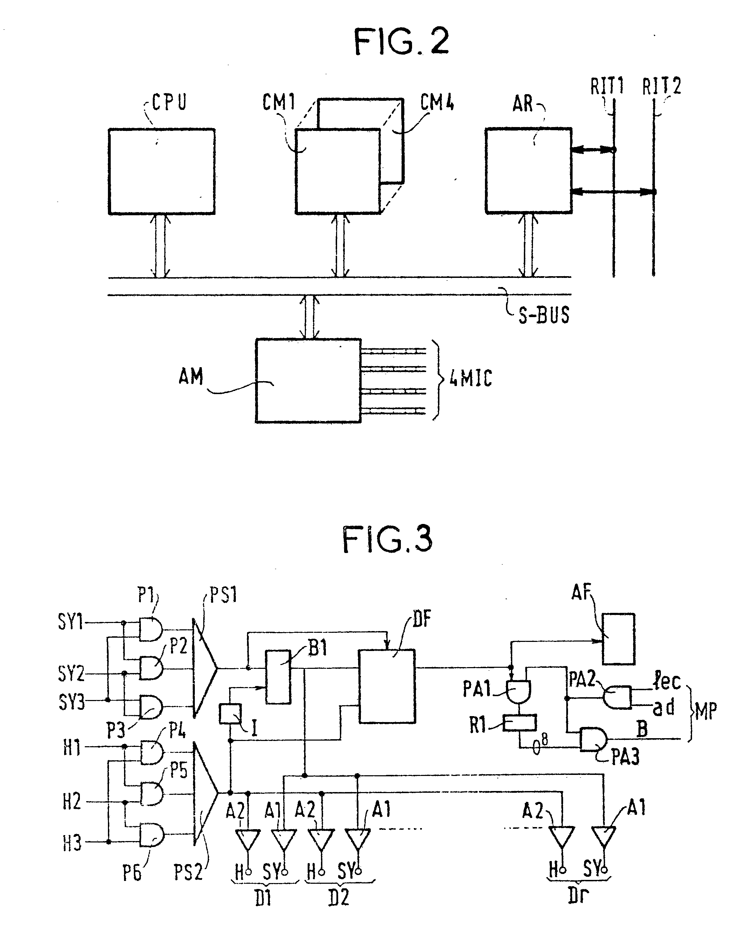

Une unité de commande UC est représentée schématiquement sur la figure 2.

Une unité UC comporte les organes, reliés à un bus système SBUS.

- une carte processeur CPU comportant un microprocesseur,
- des cartes mémoires telles CM1 à CM4,
- une carte coupleur AR reliée aux liaisons RIT1 – RIT2,
- une carte coupleur AM reliée aux quatre liaisons multiplex MIC qui desservent un groupe GUC.

Le microprocesseur a accès au bus système SBUS et à un bus résident pour la gestion des ressources implantées sur la carte CPU: mémoire morte contenant le logiciel d'initialisation, mémoire vive, registres, temporisation. Ce microprocesseur est par exemple le circuit 8086 de la société INTEL.

Le logiciel est réparti de par la nature du système. Il est organisé en machines logiques, qui sont des sous-ensembles du logiciel vus comme des unités de commande indépendantes, ne communiquant avec l'environnement que par échanges de messages. Les machines logiques correspondent à des fonctions logiquement indépendantes: traitement d'appels téléphoniques, gestion de fichiers, interprétation de commandes opérateur, gestion de l'heure, ... L'ensemble de commande est de ce fait remplacé — du point de vue de l'utilisateur — par un réseau de machines logiques. Cette généralisation de l'architecture du matérial est motivée par deux considérations:

— La communication par messages existe nécessairement entre unités de commande puisque celles-ci ne disposent pas de mémoire commune,
— On a distingué machine logique et machine physique car, pour des raisons économiques, on est amené à regrouper sur une unité de commande plusieurs fonctions indépendantes pour utiliser au maximum le volume mémoire et la puissance de calcul. Les fonctions sont regroupées à la génération du système.

Certaines machines logiques peuvent être répétées dans plusieurs microprocesseurs. Par exemple, il existe 1 à 32 machines logiques de traitement d'appels téléphoniques gérant chacune un certain nombre d'abonnés et de circuits vers d'autres centraux. On peut ainsi accroître la capacité de l'autocommutateur par adjonction d'unités de commande supplémentaires.

L'adressage des machines logiques est fait par nom plutôt que par adresse physique. L'envoi d'un message à une machine logique s'effectue de la même manière, que le destinataire soit dans la même unité de commande ou dans une autre. De cette manière, les reconfigurations sont transparents à la plupart des programmes.

Les machines logiques ont les caractéristiques suivantes:

— Ce sont des unités d'édition de lien et de chargement;
— Ce sont des ensembles de tâches (processus asynchrones),
— Les messages sont adressés à des tâches dans les machines logiques,
— A chaque tâche sont associées deux files d'attente de messages: une file de requête et une file de réponses aux requêtes,
— Les tâches d'une même machine logique peuvent, elles aussi, communiquer entre elles par échanges de messages.

Le système d'exploitations est réalisé par un noyau résident qui est répété sur chaque unité de commande. On y trouve:

— une séquence d'initialisation en mémoire morte capable de charger le reste du noyau résident, à l'initialisation.
— Un systeme des gestion des tâches et des échanges SGTE qui constitue le coeur du système d'exploitation. Il est lui-même constitué de deux sous-ensembles:
— un ensemble de services assurant la gestion des échanges, la gestion de la mémoire, la gestion des tâches. Cet ensemble comprend des primitives appelées par les machines logiques:
  — envoi de messages,
  — attente de requêtes, de réponses,
  — connexion d'une procédure à une interruption (une telle procédure communique par messages avec les autres tâches de la machine logique à laquelle elle appartient),
  — lecture d'informations diverses: n° de tâche courante, heure...
— une machine logique de supervision incluse systèmatiquement dans chaque microprocesseur au démarrage. C'est elle qui rend les services liés à la gestion du microprocesseur, en particulier:
  — charger une machine logique dans l'unité de commande et l'activer,
  — indiquer où se trouvent les machines logiques implantées dans les autres microprocesseurs,
  — supprimer une machine logique,
  — redémarrer l'unité de commande,
  — mettre à jour son horloge.

Par ailleurs, la machine logique de supervision assure des fonctions de test et de défense de l'unité de commande, de gestion de données et d'aide à la mise au point.

La répartition du logiciel en machines logiques et en tâches qui peuvent communiquer entre elles par messages, le destinataire étant reconnu par un code d'identification (numéro de machine logique, numéro de tâche) indépendant de l'implantation physique, permet de configurer le système au départ, et de le reconfigurer après une modification ou en cas de panne d'une unité de commande.

Pour cela l'implantation des machines logiques est pilotée par une machine logique de gestion du réseau de commande MLR, constitué par l'ensemble de commande, les liaisons point à point RIT1, RIT2 et les distributeurs DR1, DR2. Pour connaître l'état du système et commander les reconfigurations, la machine logique de gestion MLR Interroge périodiquement tous les microprocesseurs. Dans chaque microprocesseur est implantée une tâche de maintenance qui effectue des tests internes et indique à la machine logique de gestion MLR l'état du processeur.

L'ensemble du logiciel est stocké sur un disque dupliqué pour des raisons de sécurité. Les deux disques sont gérés par des microprocesseurs distincts. Au moment de l'initialisation, les séquences d'initialisation des deux microprocesseurs avec disque décident, par échange de message temporisé, lequel doit démarrer en devenant le microprocesseur maître. La séquence d'initialisation de de ce dernier charge:

- le système de gestion des tâches et des échanges SGTE,
- une machine logique assurant la gestion des fichiers,
- la machine logique de gestion du réseau de commande.

On va maintenant décrire l'organisation des groupes d'unités de terminaux, comportant les moyens suivants:

- Faisceaux de raccordement aux autres organes de l'autocommutateur (réseau de connexion, UC, base de temps),
- Moyens de structure interne des unités de terminaux,
- Interfaces d'échange de messages avec le processeur gestionnaire (UC).

Pour des raisons de défense et de modularité de terminaux, les liaisons entre le réseau de connexion central et les groupes d'unités GUT et de commande GUC sont organisées en faisceaux F (figure 1), chaque faisceau regroupant deux liaisons multiplex, une liaison de distribution d'horloge et une liaison de synchronisation. Les faisceaux F sont reliées au répartiteur RR du réseau de connexion, et, dans chaque groupe d'unités de terminaux GUT et de commande GUC, à un circuit d'horloge et de synchronisation dupliqué CBT.

Chaque groupe est relié par les deux faisceaux F distribuant les quatre liaisons multiplex d'accés au quatre plans du réseau de connexion.

Chaque circuit d'horloge et de synchronisation CBT distribue l'ensemble des signaux aux unités du groupe, par une liaison commune dupliquée LC comportant deux liaisons multiplex. Ces éléments sont revendiqués dans la demande de brevet européen EP-A-0 075 248 profitant de la même date de priorite que la présente demande.

Une base de temps générale BTG est formée de trois oscillateurs OS1 à OS3; elle est par exemple du type décrit dans le brevet français n° 2 390 856 de la demanderesse.

Chaque oscillateur délivre un signal d'horloge H1, H2, H3 ainsi qu'un signal de synchronisation de trame SY1, SY2, SY3 d'une fréquence égale à la fréquence de trame des liaisons multiplex.

La distribution synchrone des signaux d'horloge et de synchronisation à l'ensemble des organes du central est réalisée par des modules des distribution de signaux MD (figure 1) qui effectuent un choix majoritaire des couples de signaux d'horloge et de synchronisation reçus des trois oscillateurs, un contrôle de faute, et une distribution vers r destinataires, via r liaison D1 à Dr par module.

La figure 3 montre un exemple de module de distribution de signaux MD. Les signaux de synchronisation et d'horloge des trois oscillateurs sont reçus respectivement par deux circuits de choix majoritaire formés chacun de trois portes ET et d'une porte Ou, porte ET-P1, P2, P3 et porte OU-PS1 pour les signaux de synchronisation, porte ET-P4, P5, P6 et porte PU-PS2 pour les signaux d'horloge.

La porte PS1 alimente des amplificateurs A1 à travers une bascule B1 activée par le front descendant du signal majoritaire issu de la porte PS2 via l'inverseur I. Un détecteur de faute DF relié à la sortie des portes PS1, PS2 et de la bascule B1, et à l'entrée d'un afficheur AF, permet de signaler les fautes de distribution. Naturellement les oscillateurs ont leur propre moyen de détection de fautes. Un registre d'échanges R1 et des portes ET d'accès PA1 à PA3 permettent la supervision du module de distribution MD par un microprocesseur MP associé. Dans une réalisation préférée, les modules MD sont situés dans les alvéoles du réseau de connexion, et la supervision est faite par les microprocesseurs des marqueurs.

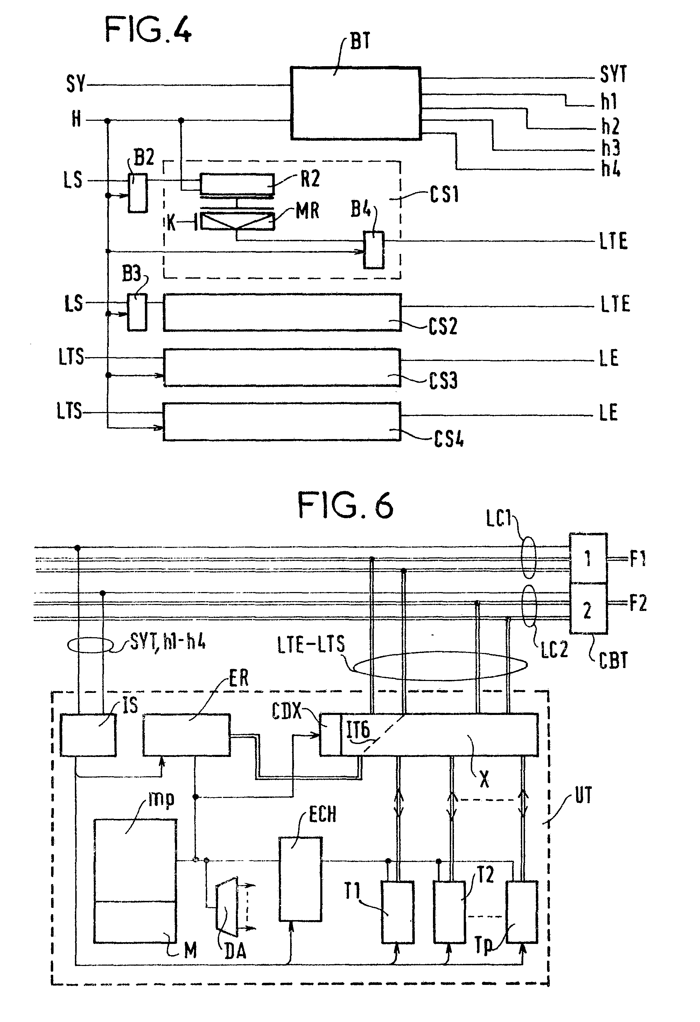

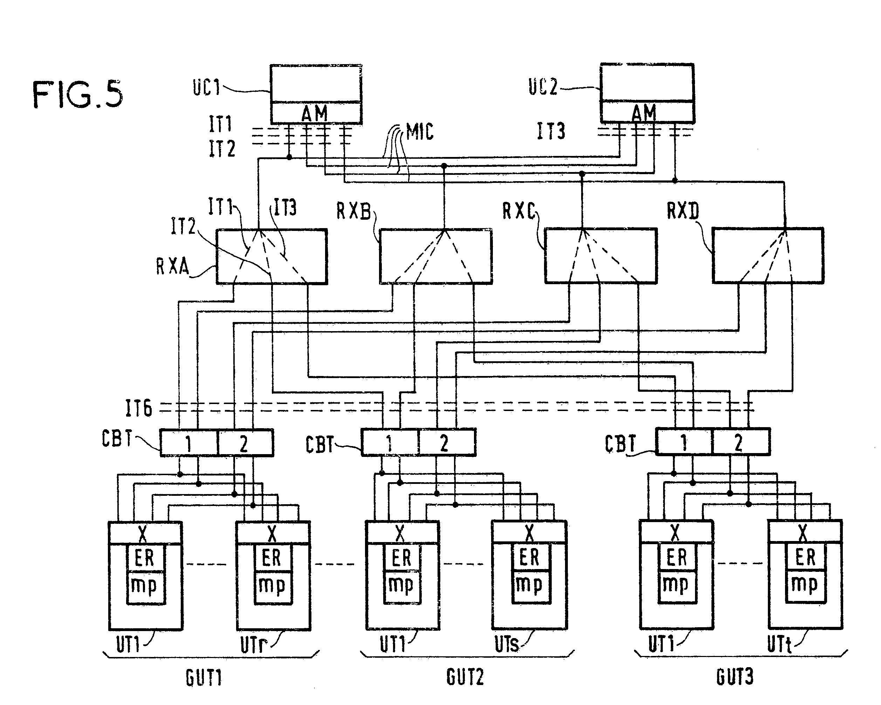

Au niveau d'un groupe d'unités de terminaux GUT, chaque circuit d'horloge et de synchronisation de temps CBT est relié à un module de distribution MD et à deux liaisons multiplex MX soit en fait à deux liaisons sortantes LS et deux liaisions entrantes LE. Les deux circuits CBT d'un groupe sont reliés à des plans différents du réseau de connexion et à des modules MD indépendants. Ces circuits CBT comportent un circuit de base de temps interne BT, qui élabore les signaux de synchronisation SYT et les signaux d'horloge h1 à h4 nécessaires aux unités de terminaux UT, ainsi que des circuits de synchronisation CS1 à CS4 des liaisons multiplex (figure 4).

Les circuits de synchronisation CS1 et CS2 sont insérés entre les deux liaisons multiplex sortantes LS et les deux liaisons multiplex entrantes de terminaux LTE. Les circuits de synchronisation CS3 et CS4 sont insérés entre les deux liaisons multiplex sortantes de terminaux LTS et les deux liaisons entrantes LE.

En outre les liaisons sortantes LS sont échantillonées par des bascules B2 et B3 pilotées par les signaux d'horloge H.

Les circuits de synchronisation CS sont formés d'un registre tampon R2, d'un multiplexeur MR dont l'adresse K est câblée de manière à introduire un déphasage constant, qui dépend du type d'unités de terminaux du groupe concerné, et d'une bascule de sortie B4.

Deux faisceaux supplémentaires F fournissent à partir de répartiteur RR les signaux d'horloge H et de synchronisation SY aux distributeurs DR1 et DR2 pour leur permettre l'élaboration des signaux d'horloge des liaisons point à point RIT1 et RIT2.

Les deux faisceaux F desservant un même organe sont complètement indépendants, car leurs liaisons proviennent de plans différents. En outre les modules correspondants sont desservis par des alimentations distinctes.

Le choix du faisceau actif peut être réalisé indépendamment par le microprocesseur de chaque unité de terminaux. Celui-ci possède en effet son propre oscillateur.

Les canaux de liaison entre groupes d'unités de terminaux et unités de commande UC sont représentés à la figure 5. On a représenté trois groupes d'unités de terminaux GUT1 à GUT3.

Les groupes GUT1 et GUT2 sont gérés par une même unité de commande UC1 et le groupe GUT3 est géré par une autre unité de commande UC2. Les unités UC1 et UC2 appartiennent à un même groupe GUC et utilisent donc les mêmes liaisons multiplex MIC vers le réseau de connexion.

Dans cet exemple on utilise un coupleur AM du type décrit dans le document EP 62 296 A1, qui n'a pas été publié avant le dépôt de la présente demande. Chaque canal à 64 kbit/s entre une unité de commande et un groupe GUT utilise de intervalles de temps IT de même rang en émission et en réception et dur les quatre multiplex vers le réseau de connexion

IT1: UC1 – GUT1; IT2: UC1 – GUT2; IT3: UC2 – GUT3.

Sur les liaisons multiplex entre réseau de connexion et un groupe GUT, tous les canaux d'échange avec les unités de commande utilisent un intervalle de temps réservé IT6.

Les message d'une unité de commande vers un groupe GUT sont émis simultanément sur les quatre liaison multiplex et ils parviennent à toutes les unités de terminaux UT. Dans chaque unité de terminaux, le microprocesseur mp choisit un canal d'écoute en établissant par son mini-réseau X une connecion entre le canal choisi et l'accès au circuit d'échange en procédure HDLC, ER.

Tout message comporte le numéro de l'unité de terminaux destinataire, ce qui permet à celle-ci de ne traiter que les messages qui lui sont destinés.

La structure générale d'une unité de terminaux, commune à divers types d'unités UT décrits plus loin, est représentée à la figure 6.

Le mini-réseau X commute les liaisons LTE-LTS vers les terminaux T1 à Tp, et relie au circuit ER le canal IT6 choisi par le microprocesseur mp. Un circuit de commande CDX du réseau et relié au bus d'adresse du microprocesseur. Celui-ci est relié aux terminaux par un circuit d'échanges ECH formé de circuits de marquage et de registres. La mémoire M du microprocesseur est formée d'une partie en mémoire morte et d'une partie en mémoire vive. Un décodeur d'adresse DA permet la validation des différents circuits par le microprocesseur.

Les signaux de synchronisation (SYT) et d'horloges (h1 à h4) des deux liaisons LC1 et LC2 sont reçus et distribués par une interface IS, reliée aux terminaux, au circuit ER, au circuit ECH, et éventuellement au mini-réseau X si celui-ce est de type temporel.

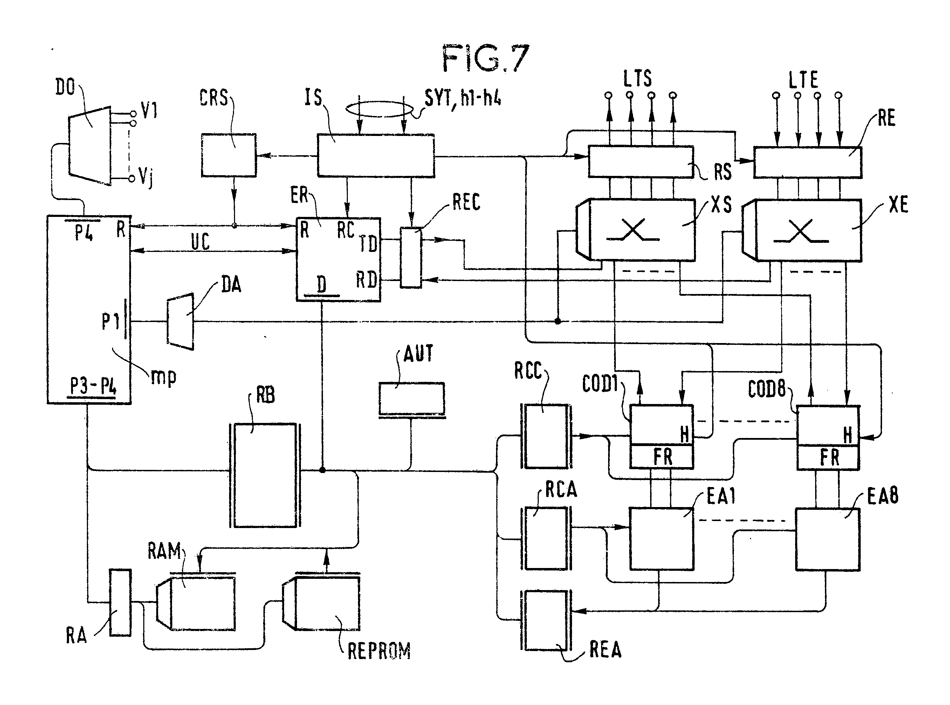

La figure 7 montre une unité de terminaux pour le raccordement de lignes d'abonnés.

Le microprocesseur mp et le circuit ER sont par exemple les circuits MC6801 et MC68A54 fabriqués par la firme MOTOROLA. Les équipements d'abonnés de type analogique (EA1 à EA8) sont reliés chacun à un codeur/numérique analogique et analogique/numérique ou Codec (COD1 à COD8) associé à des filtres d'entrée et de sortie FR. Côté émission, la sortie du codec est reliée aux liaisons LTS par un commutateur XS et un registre de sortie RS. Côté réception, les liaisons LTE sont reliées à l'entrée des codecs par un registre RE et un commutateur XE.

Dans cet exemple les commutateurs XE et XS sont des matrices de type spatial, la voie temporelle étant déterminée par une commande fournie aux codecs par le microprocesseur par l'intermédiaire d'un registre RCC. Les codecs reçoivent également des signaux d'horloge de l'interface de synchronisation IS relié aux liaisons SYT, h1 – h4 des faisceaux LC1, LC2.

Les commutateurs XE, XS sont commandés par les sorties P1 du circuit 6801, à travers un décodeur DA.

Les mémoires de type RAM et ROM du microprocesseur sont adressées par la sortie P3 et les poids 0 à 2 de la sortie P4, à travers un registre d'adresse RA.

Les échanges entre le microprocesseur et les équipements d'abonnés sont réalisés par l'intermédiaire d'ensembles de registers:

— Ensemble de registres RCA pour la commande par le processeur des relais de sonnerie et de renvoi aux essais.

— Ensemble de registres REA pour l'acquisition de l'état de boucle d'abonné.

Ces ensembles de registre sont reliés aux sorties P3 par des registres RB. Les registres RB sont aussi reliés au bus D du circuit ER et à un circuit (AUT) de reconnaissance d'adresse de l'unité de terminaux permettant à celle-ci de reconnaître les message qui lui sont destinés, en provenance de l'unité de commande UC.

Les commandes d'activation des circuits de l'unité de terminaux sont émis par les sorties P4 vers un décodeur d'ordres DO. Une liaison de commande LIC relie le microprocesseur au circuit ER. Un compteur de supervision CRS (ou »Watch-dog«) est relié à l'entrée R (RESET) des circuits 6801 et 68A54.

Les entrées-sorties TD/RD du circuit ER sont reliées aux matrices XS et XE par un registre REC synchronisé par l'interface IS.

Les tâches du microprocesseur mp comportent l'analyse de tous les messages reçus par le circuit ER, la réponse aux messages qui lui sont destinés, l'exécution des ordres, l'analyse des états de boucle des abonnés, et l'exécution de progammes de tests de bon fonctionnement de l'unité de terminaux.

Les échanges avec l'unité de commande seront décrits plus loin.

Une unité de terminaux de circuits analogiques de structure très proche de la précédente peut être utilisées dans cette application de l'invention. Par exemple dans le cas de circuits 4 fils à signalisation par fils RON/TRON, avec la structure représentée à la figure 7, les équipements des circuits sont à la place des équipements d'abonnés, les registres RLA étant utilisés pour la commande des fils TRON, et les registres REA pour l'acquisition de l'état des fils RON.

Compte-tenu des trafis de tels circuits, qui peut être en moyenne de l'ordre de 0,7 Erlang, une unité UT comportera seulement 4 circuits, le groupe GUT pouvant comporter par exemple 6 unités UT, soit au total 24 circuits.

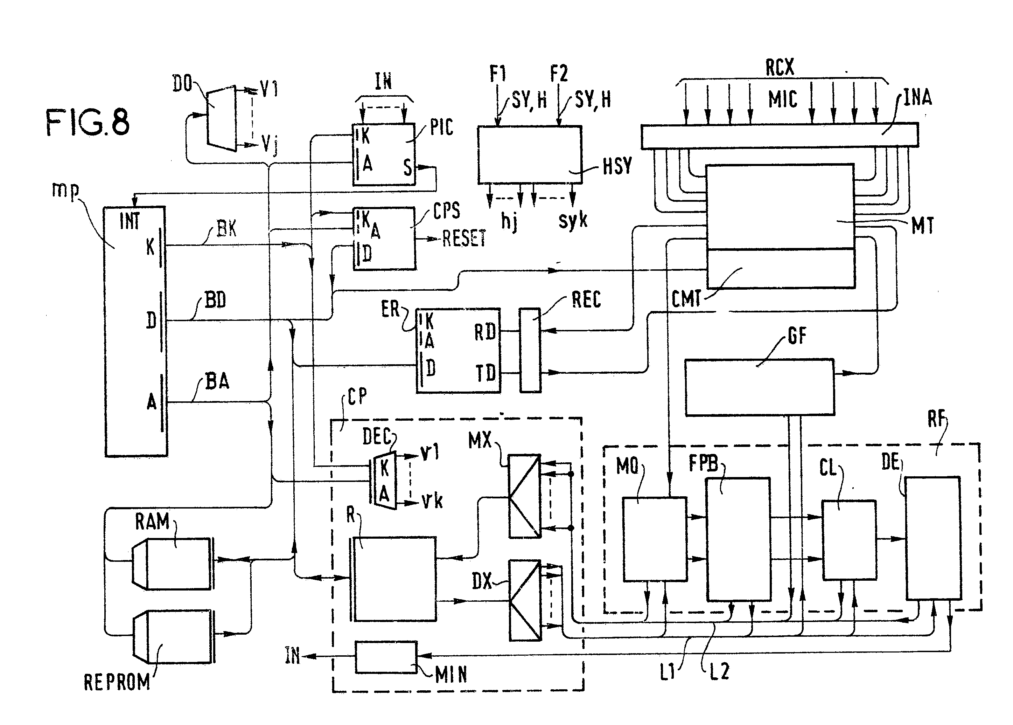

La figure 8 représente un groupe GUT d'auxiliaire de signalisation multifréquence. Compte-tenu du volume élevé d'informations traitées, le groupe ne comporte qu'une seule unité UT et celle-ci est de structure différente des précédentes, mais l'interface avec le réseau de connexion et l'unité de commande UC reste identique.

L'auxiliaire est piloté par un microprocesseur, par exemple de type MC6809 de la société MOTOROLA, relié à des mémoires (RAM, REPROM), à un circuit ER (par exemple 68B54), à un circuit d'interruption programmable PIC (par exemple 6828), et à un compteur programmable de supervision CPS (par exemple 68B40).

Les circuits sont reliés de manière connue aux bus du microprocesseur mp: bus d'adresse BA, bus de données BD, bus de commande BK.

Le générateur et le récepteur numériques de fréquences sont par exemple des types décrits respectivement dans les documents EP-34 336 A1 et EP-43 320 A1, ce dernier n'ayant pas encore été publié à la date de priorité de la présente demande. Le générateur GF peut émettre sur 30 voies d'une liaison multiplex les combinaisons de fréquences de 8 codes différents. Le récepteur RF peut recevoir sur une liaison multiplex 30 voies de signalisation suivant 64 codes différents. Le récepteur effectue une translation de fréquence des signaux à l'aide d'un générateur interne produisant les fréquences des codes utilisés, puis un filtrage passe-bas et une analyse d'énergie en sortie des filtres. Il comporte pour cela un circuit de modulation MO, un groupe de filtre passebas FPB, un circuit de classement C1 des fréquences correspondant aux énergies les plus élevées, et un circuit de décision effectuant une préconfirmation des signaux reconnus.

Dans l'application décrite, l'auxiliaire est relié directement aux faisceaux (F1, F2) vers le réseau de connexion RCX, et il intègre donc les fonctions des circuits de synchronisation et d'horloge CBT décrits plus haut.

Les liaisons multiplex sont reliées par une interface d'adaptation INA à une matrice de connexion temporelle MT commandée par un circuit CMT. On utilise par exemple une matric de même principe que les commutateurs CX du réseau de connexion décrit dans le document EP-62 295 A1, qui n'a été publié qu'après la date de dépôt de la présente demande.

La matrice MT commute les voies des 4 liaison multiplex qui desservent l'auxiliaire vers les vois des liaisons multiplex reliées au récepteur et au générateur et vers les voies d'émission et réception du circuit ER.

On a représenté sur la figure 8 un circuit de distribution d'horloges et de synchronisation HSY qui dessert les différents circuits de l'auxiliaire, les signaux hj et syk étant élaborés à partir des signaux H et SY reçus des faisceaux F1, F2.

Les échanges d'informations entre le microprocesseur et le récepteur décrits dans le document EP-32 320 A1 plus haut, et entre le microprocesseur et le générateur, sont les suivants:

— Chargement par le microprocesseur mp des numéros de codes affectés aux vois dans une mémoire du circuit MO.
— Chargement des numéros de code et des numéros de fréquence affectés aux voies dans une mémoire du générateur.
— Relecture de la mémoire par le microprocesseur.

- Test et simulation: chargement et relecture du registre d'entrée du circuit MO.
- Test et simulation des autres circuits (FPB, CL, DE) et du générateur.
- Informations transmises par le circuit DE au microprocesseur concernant les signaux de fréquences reçues et analysées.

Ces échanges sont réalisés sur liaisons série par un coupleur CP comportant un groupe de registres à décalage reliés au bus BD du microprocesseur et à des multiplexeurs MX et des démultiplexeurs DX d'accès à des liaisons séries (L1, L2) aller et retour vers le récepteur et le générateur.

Pour émettre les informations de signalisation vers le microprocesseur, le circuit DE émet une demande d'interruption vers le circuit PIC, demande relayée dans le coupleur par un circuit de mémorisation MIN.

Le coupleur est piloté par un décodeur DEC relié aux bus BA et BK.

Les fonctions réalisées par le microprocesseur sont les suivantes:

- Analyse des messages reçus par le circuit ER en procédure HDLC.
- Exécution des ordres de l'unité de commande UC.
  - commandes d'émission de fréquences,
  - commande de connexion de récepteur,
  - exécution de programmes de test.
- Traitement des signaux préconfirmés fournis par le récepteur, sur interruption demandée par le récepteur;
- Emission de messages vers l'unité de commande indiquant les fréquences reconnues.
- Traitements en cas de faute.
  - programmes de localisation de la carte en défaut,
  - message de faute vers l'unité de commande.

## Interface d'échange de message entre groupes d'unités de terminaux GUT et unité de commande UC

Les moyens que l'on a décrits permettent d'avoir la même interface, avec un protocole d'échanges identique, pour tous les groupes GUT.

A titre d'exemple, on décrira l'interface utilisée dans le cas d'un autocommutateur du type indiqué dans le document EP-62 296 A1 déjà cité:

Les coupleurs de liaisons multiplex (AM) des unités de commande UC comportent un automate qui émet les ordres de l'unité de commande UC vers les groupes GUT et acquiert les réponses et les autres informations émises par les groupes GUT par une procédure d'exploration. Les échanges entre coupleur AM et le microprocesseur de l'unité de commande sont gérés dans celle-ci par une machine logique dite »handler«. Les conditions d'utilisation des canaux de commande sont les suivantes:

- Le dialogue s'effectue suivant une procédure question-réponse où le coupleur est maître et le groupe GUT esclave.
- Le coupleur émet chaque commande vers un GUT simultanément sur les 4 multiplex et sur les vois temporelles de même rang.
- Il reçoit les messages d'un groupe GUT sur un seul canal, porté par la même voie temporelle que les canaux d'émission.
- Le rôle du protocole est de prémunir contre les pertes d'informations:
- Le mécanisme de questions-réponses décrit plus loin évite les pertes, duplications et inversions de messages.
- Un mécanisme de répétition prévient contre les pertes par erreurs de transmission.

Les séquences normales d'échanges d'informations UC-GUT sont seulement de deux types:

1) Interrogation d'une unité de terminaux

   a) cas où celli-ci a des informations à transmettre AM
UT
POLL
— Exploration
INFO
— Réponse: envoi des informations
RACK

— Accusé de réception ⟶ FACK
— Accusé de réception final ⟵

AM UT

b) L'UT n'a rien à transmettre ⟶ POLL

Elle répond par un simple accusé de réception final ⟵ FACK

2) Envoi d'un ordre — AM UT

— Emission de l'ordre ⟶ ORDRE
— Réponse: ordre bien reçu ⟵ ACK
— Accusé de réception ⟶ RACK
— Accusé de réception final ⟵ FACK

Dans chaque unité de terminaux, ces échanges sont gérés par un programme en mémoire morte qui permet les changements d'horloge et les changements de canal d'écoute, et qui utilise 2 temporisations.

— Une temporisation T1, dite »rapide« qui est réarmée à chaque détection, par l'unité de terminaux UT, d'une configuration »FLAG-ADRESSE« sur le canal d'écoute, que l'adresse soit ou non celle de l'unité de terminaux UT; un débordement de cette temporisation signale une absence complète de message en provenance de l'unité de commande sur le canal, et entraîne un basculement d'écoute.
— Une temporisation T2, plus lente servant à se prémunir contre un type de panne particulier (défaut partiel d'une case mémoire d'un plan du réseau) faisant que es séquences »FLAG-ADRESSE« circulent sur le canal d'écoute, sans que pour autant il s'agisse de message utile.

Le débordement de cette temporisation doit entraîner un examen complet par l'unité de terminaux UT de la validité du message reçu, même dans le cas où il ne lui est pas destiné, avec basculement si le message est incorrect.

Le microprocesseur de l'unité de terminaux UT gère également une file de messages d'ordres, et en cas de débordement le message n'est past pris en compte. L'absence de réponse provoquera une répétition de l'ordre par l'unité de commande UC.

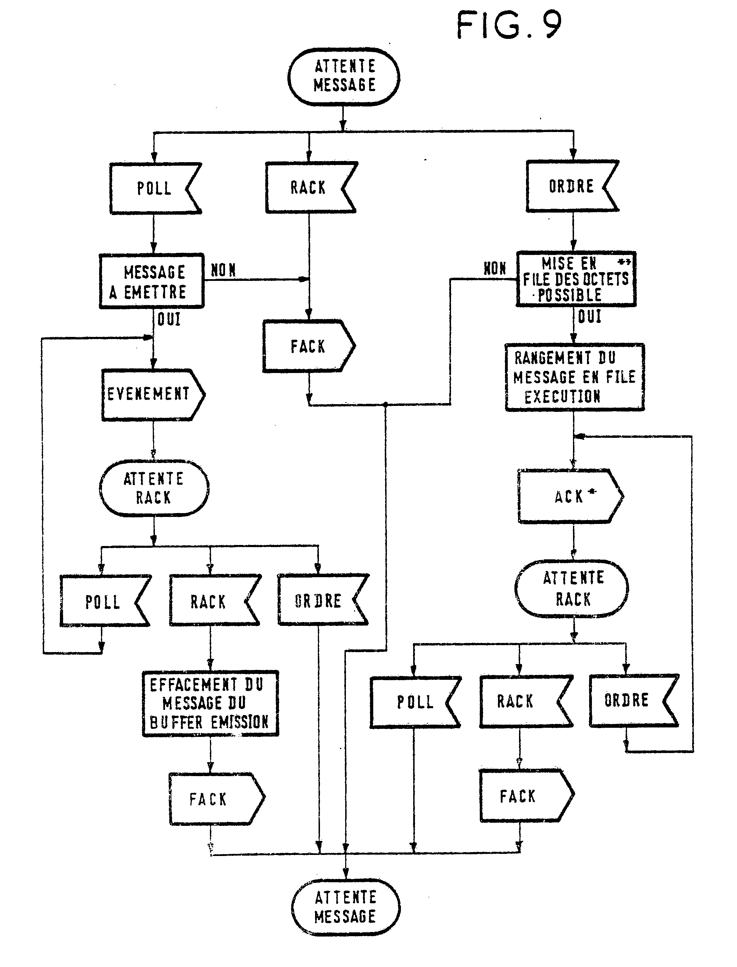

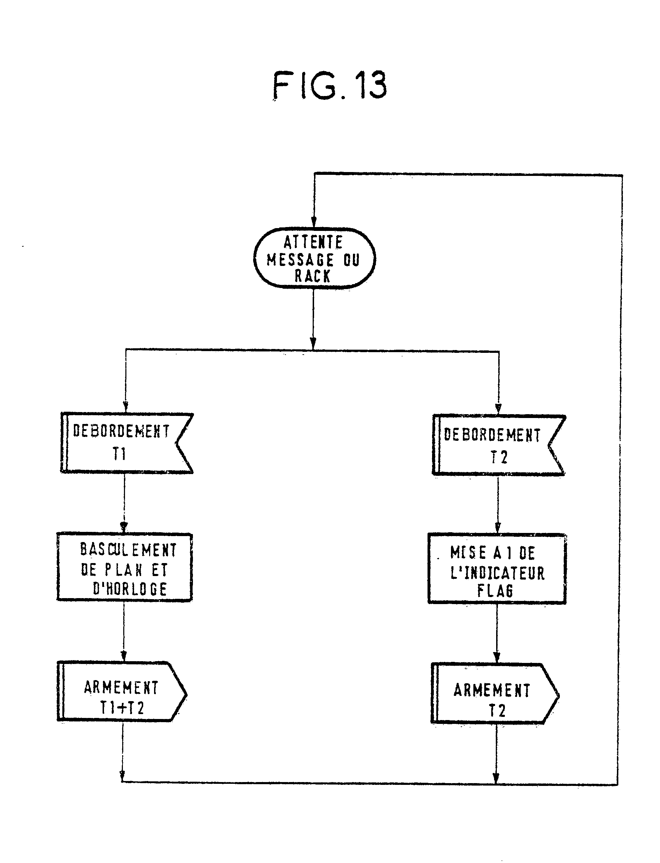

Un diagramme de prise en compte des messages par l'unité de terminaux UT est représenté à la figure 9. Le diagramme de la figure 13 montre la gestion des temporisations.

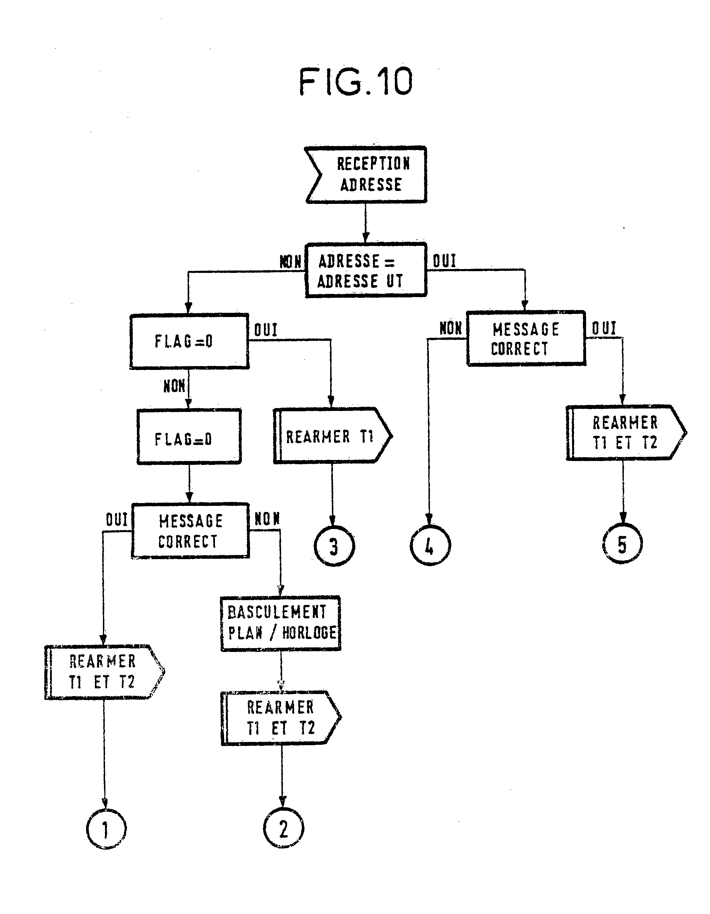

Le diagramm de la figure 10 montre comment sont traités les différents cas:

— L'indicateur FLAG est positionné à 1 par le microprocesseur en cas de débordement de T2; cela sert à vérifier s'il est justifié de rester durant une période égale à T2 sans message destiné à cette unité de terminaux UT.
— Les branches 1, 3, 5, correspondent à un fonctionnement satisfaisant.
— La branche 4 correspond à un message erroné: le non réarmement de la temporisation T1 provoquera, en cas de répétition de l'erreur, un basculement d'écoute.
— La branche 2 correspond à une détection d'anomalie.

A chaque »basculement d'écoute«, l'unité de terminaux change simultanément de distribution d'horloge et de canal d'écoute, suivant l'algorithme ci-après:

| Distribution d'horloge | Plan |
|---|---|
| 0 | 0 Configuration de départ |
| 1 | 3 |
| 0 | 1 |
| 1 | 2 |
| 0 | 3 |
| 1 | 0 |
| 0 | 2 |
| 1 | 1 |

Ces changements se font sans tenir compte de l'indisponibilité éventuelle des nouveaux éléments utilisés. Dans le cas le plus défavorable, des basculements en cascade sont donc possibles.

Il est admis que, sauf dans le cas (exceptionnel) de dégradation grave du système, une unité de terminaux UT arrive à rétablir son écoute cinq basculements consécutifs au maximum. L'algorithme de choix présenté tend à respecter cette hypothèse dans le cas d'un système deux plans, (plan 0 et 2 équipés).

Description du protocole côté coupleur de l'unité de commande UC.

Ce protocole permet la défense contre les erreurs et pannes:

— Pertes et duplications de messages, perte d'écoute: le mécanisme de questions-réponses géré par le coupleur, permet la détection et la signalisation des défauts dans les messages reçus. La machine logique »handler« déjà citée gère les message de défauts et les interruptions demandés par le coupleur.
— Erreurs de transmission.

Les erreurs de transmission se manifestent par une absence d'acquittement de la part d'une unité de terminaux UT: cette non réponse entraîne le débordement d'une temporisation armée au moment de l'envoi d'un message par le coupleur. Dans ce cas, il y a réémission du message à destination de l'unité de terminaux UT fautive, le nombre maximum de réémissions successives étant limité par un seuil; en cas de dépassement de ce seuil, une interruption est générée.

La valeur de la temporisation doit couvrir l'emission des messages vers l'unité de terminaux UT, sa réception et sa prise en compte et l'émission et la réception de la réponse.

Le nombre de réémission maximum d'un message est limité par un seuil. Pour éviter des procédures de défense en cascade côté unité de commande UC et côté unité de terminaux UT, le seuil choisi doit laisser le temps à l'unité de terminaux UT d'effectuer les basculements d'écoute dans les cas définis plus haut. A titre d'exemple, on utilisera les valeurs suivantes pour les différentes données:

— Cycle d'exploration = 50 ms
— Nombre de basculements maximum = 5
— Temporisation avant réémission = 22 ms
— Nombre maximum de réémissions = 15

Le coupleur effectue également une régulation de flux des messages à l'aide d'une file d'émission et une file de réception pour chaque canal:

— Cas de saturation de la file de réception.

Le »handler« prévenu par interruption, fait passer le canalm concerné dans l'état »DISABLE RACK« (suppression de l'émission de RACK). Dans cet état, les informations en provenance des unités de terminaux UT ne sont plus mises en file, elles sont réémises périodiquement par les unités de terminaux UT. (La continuité du polling évitant le basculement de plan d'écoute côté unités de terminaux UT); la durée de cet état »DISABLE RACK« doit permettre aux utilisateurs de vider la file réception, sans que pour autant les autres files du système ne saturent. Une durée de l'ordre de 300 à 500 ms semble raisonnable. Pour diminuer les cas de saturation de cette file, il n'y aura pas de messages de défauts mis en file sur interruption de défaut de scrutation ou de commande et les messages ACK (accusé de réception d'une commande) ne seront pas mis en file de réception.

— Cas de saturation de la file d'émission.

Le »handler« refuse la mise en file de nouvelles commandes et prévient l'utilisateur qui reste maître de sa décision (soit abandon de la commande en libération de la communication associée, soit attente et nouvelle tentative d'insertion de la commande dans la file).

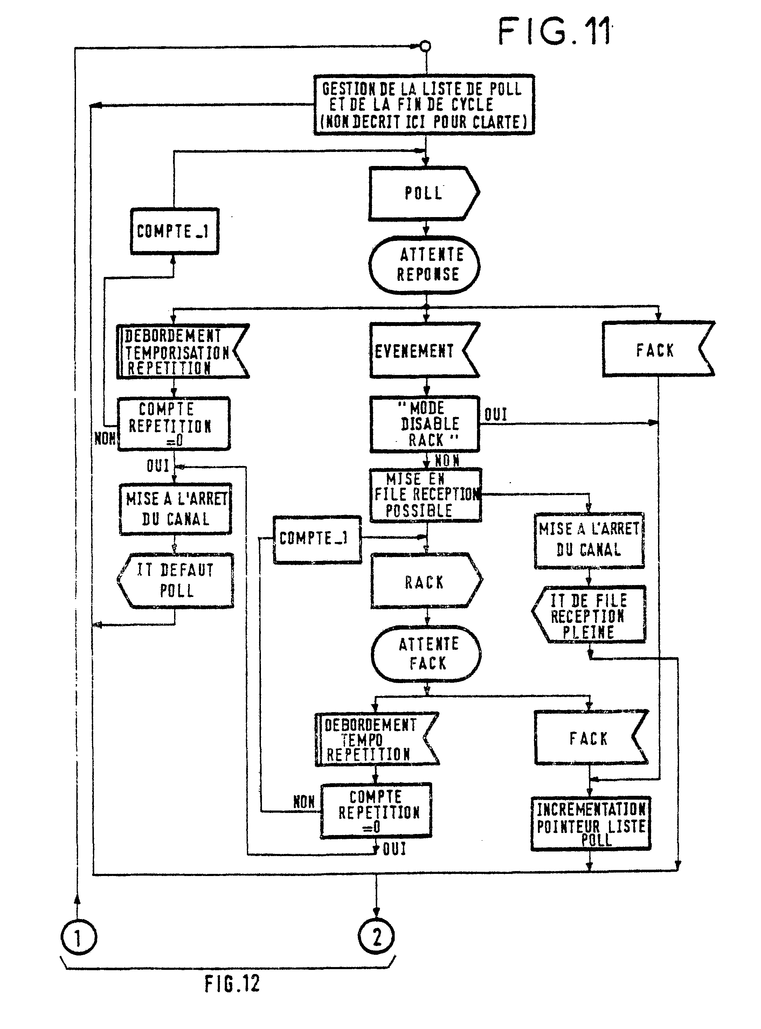

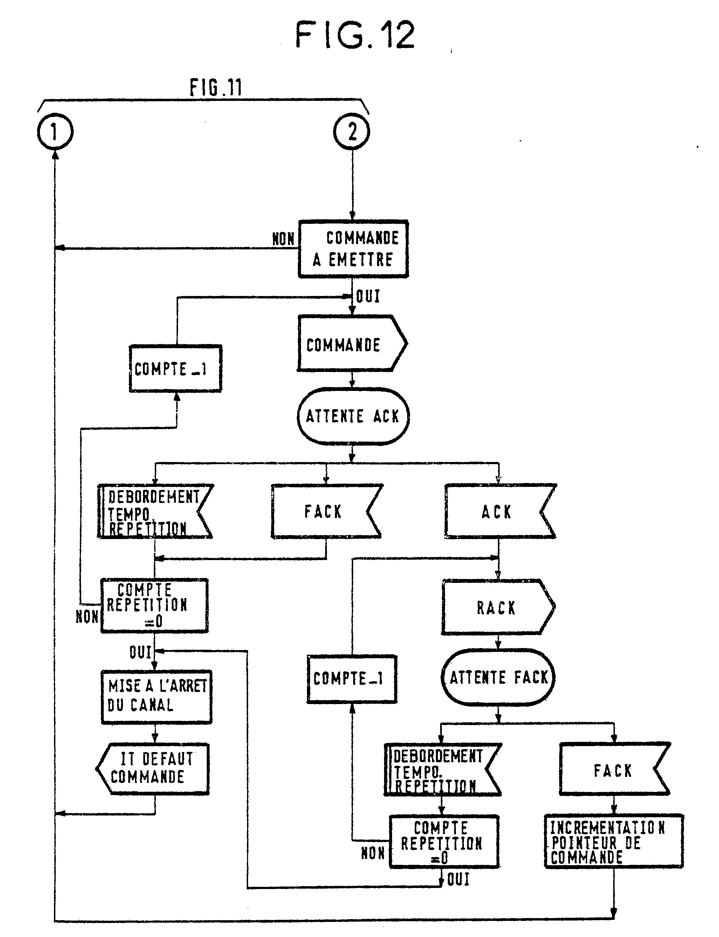

La gestion des messages par l'automate du coupleur est décrite par les diagrammes des figures 11 et 12:

— L'évènement »Débordement de Temporisation Répétition« correspond au débordement de la temporisation d'attente de réponse de l'unité de terminaux UT; il provoque la décrémentation du compteur de reprise; le passage à zéro de ce compteur provoque l'arrêt du canal et l'envoi d'une interruption indiquant un défaut.
— Le pointeur de commande est le pointeur dans la file d'émission de messages. Il n'est incrémenté que si la commande a été émise et reçue correctement. Cela assure qu'en cas de défaut, la commande incriminée sera l'objet de la prochaine tentative de réémission.
— L'apparition d'une interruption de défaut de scrutation ou de commande, ou d'une interruption de débordement de file, s'accompagne de la mise à l'arrêt du canal. Ceci permet de diagnostiquer l'unité de terminaux fautive.
— La branche 3 (fig. 11) correspond à la fin du cycle de scrutation (»POLL«) des unités de terminaux par le coupleur AM.

**Revendications**

1. Groupe d'unités de terminaux dans un autocommutateur comportant un réseau de connexion formé de quatre plans indépendants constitués de commutateurs (CX) temporels pilotés par des marqueurs (MQ), des unités de terminaux (UT) organisées en groupes (GUT) reliés au réseau de connexion, chaque unité de terminaux comportant un microprocesseur (mp) et des terminaux (T) constitués chacun par un des équipements spécifiques de l'autocommutateur — notamment pour un autocommutateur téléphonique: équipement d'abonné, de circuit, de signalisation, d'essais — des unités de commande (UC) reliées au réseau de connexion effectuant la commande et la gestion des unités de terminaux, et des modules de distribution (MD) de signaux de synchronisation (SY) et d'horloge (H), caractérisé par le fait que chaque groupe (GUT) comporte deux circuits d'horloge et de synchronisation (CBT) formés chacun par une base de temps (BT) reliée à un module de distribution (MD), par un premier et un deuxième circuits de synchronisation (CS1, CS2) reliés chacun à un plan du réseau de connexion par une liaison sortante (LS) et aux unités de terminaux par une liaison terminale entrante (LTE), et par un troisième et un quatrième circuits de synchronisation (CS3, CS4) reliés chacun par une liaison entrante (LE) à chacun des plans auxquels sont reliés les premier et deuxième circuits de synchronisation et par une liaison terminale sortante (LTS) aux unités de terminaux, et que la commande d'une unité de terminaux (UT) par une unité de commande (UC) est réalisée par échange de messages entre le microprocesseur (mp) de l'unité de terminaux et l'unité de commande, cet échange de messages se faisant à travers le réseau de connexion en procédure sémaphore sur une voie temporelle desdites liaisons entrantes et sortantes et desdites liaisons terminales entrantes et sortantes.

2. Groupe d'unités de terminaux suivant la revendication 1, caractérisé par le fait que les messages d'une unité de commande (UC) vers une unité de terminaux (UT) sont reçus par toutes les unités de terminaux du groupe, chaque unité de terminaux comportant un circuit de reconnaissance d'adresse (AUT) permettant au destinataire du message de le prendre en compte.

3. Groupe d'unités de terminaux suivant la revendication 1, caractérisé par le fait que les messages d'une unité de commande (UC) vers une unité de terminaux (UT) sont émis simultanément sur une voie temporelle de chacune des liaisons du groupe (GUT), chaque unité de terminaux comportant des moyens de sélection de la liaison entrante sur laquelle le message est effectivement pris en compte et des moyens de selection du module de distribution (MD) effectivement utilisé par ladite unité de terminaux.

4. Groupe d'unités de terminaux suivant la revendication 1, comportant des unités de terminaux d'équipements d'abonnés, caractérisé par le fait que chaque unité de terminaux comporte:

— Une matrice spatiale (XS) reliée aux liaisons terminales sortantes (LTS),
— une matrice spatiale (XE) reliée aux liaisons terminales entrantes (LTE),
— des équipements d'abonnés (EA1 à EA8) reliés auxdites matrices par un filtre (FR) et un codeur-décodeur,
— un circuit de commande (RCC) permettant de synchroniser les codeur-décodeurs avec les voies temporelles des liaisons terminales entrantes et sortantes,

- un compteur de supervision (CRS) relié au microprocesseur pour la gestion de temporisations limitant la durée des messages et la durée d'attente de réception de messages, et
- un circuit d'échange (RCA, REA) permettant la commande des terminaux par le microprocesseur (mp).

5. Groupe d'unité de terminaux suivant la revendication 1 comportant un terminal auxiliaire d'émission et de réception de signalisation multifréquence, caractérisé par le fait qu'il comporte:

- une matrice temporelle (MT) et son circuit de commande (CMT) relié au microprocesseur,
- un générateur de fréquences (GF) relié à la matrice (MT),
- un récepteur de fréquences (RF) relié à la matrice (MT),
- un coupleur (CP) de liaison entre le microprocesseur d'une part et le récepteur et le générateur d'autre part,
- un compteur de supervision.

6. Groupe d'unités de terminaux suivant la revendication 5, caractérisé par le fait que le coupleur (CP) comporte:

- Un ensemble de registres à décalage relié au bus de données du microprocesseur et à un multiplexeur (MX) et un démultiplexeur (DX) donnant accès à des liaisons série d'émission (L1) et de réception (L2) vers le générateur et le récepteur,
- un circuit de mémorisation d'interruption (MIN) permettant de transmettre au microprocesseur des demandes d'interruption émises par le récepteur pour lui transmettre les signaux de signalisation multifréquence qu'il a reconnu.

7. Groupe d'unités de terminaux suivant la revendication 3, caractérisé par le fait que chaque unité de terminaux gère la sélection de la liaison entrante sur laquelle elle prend en compte les messages de l'unité de commande, et la sélection du module de distribution à l'aide de deux temporisations:

- une temporisation (T1) dont le débordement indique l'absence totale de messages sur la liaison entrante sélectionnée, et entraîne un basculement sur une autre liaison entrante,
- une temporisation (T2) plus longue que la temporisation (T1) indiquant l'absence de messages de l'unité de commande vers l'unité de terminaux, et dont le débordement entraîne un basculement si une erreur est détectée dans un message.

**Patentansprüche**

1. Gruppe von Endschaltungseinheiten in einer Selbstwähl-Vermittlungsanlage mit einem Koppelfeld, das aus vier unabhängigen Ebenen besteht, die von durch Markierer (MQ) gesteuerten Zeitschaltern (CX)gebildet werden, mit Endschaltungseinheiten (UT), die in an das Koppelfeld angeschlossene Gruppen (GUT) geordnet sind, wobei jede Endschaltungseinheit einen Mikroprozessor (mp) und Endschaltungen (T) enthält, die je von einem der spezifischen Bauteile der Vermittlungsanlage, insbesondere im Fall einer Fernsprechzentrale von den Teilnehmer-, Leitungs-, Signalgabe- und Testgeräten gebildet werden, mit Steuereinheiten (UC), die an das Koppelfeld angeschlossen sind und die Steuerung und Verwaltung der Endschaltungseinheiten durchführen, und mit Modulbausteinen (MD) zur Verteilung von Synchronisations- und Taktsignalen (SY, H), dadurch gekennzeichnet, daß jede Gruppe (GUT) zwei Takt- und Synchronisationskreise (CBT) besitzt, die je aus einem Basistakt (BT), der an einen Verteilmodul (MD) angeschlossen ist, aus einem ersten und einem zweiten Synchronisationskreis (CS1, CS2), die je über eine Ausgangsverbindung (LS) an eine Ebene des Koppelfelds und über eine Eingangsendverbindung (LTE) an die Endschaltungseinheiten (LTE) angeschlossen sind, und aus einem dritten und einem vierten Synchronisationskreis (CS3, CS4) gebildet werden, die je über eine Eingangsverbindung (LE) an jede der Ebenen, mit denen der erste und der zweite Synchronisationskreis verbunden ist, und über eine Ausgangsendverbindung (LTS) an die Endschaltungseinheiten angeschlossen sind, und daß die Steuerung einer Endschaltungseinheit (UT) durch eine Steuereinheit (UC) durch Nachrichtenaustausch zwischen dem Mikroprozessor (mp) der Endschaltungseinheit und der Steuereinheit erreicht wird, wobei dieser Nachrichtenaustausch über das Koppelfeld im Semaphorverfahren auf einem Zeitkanal der genannten Eingangs- und Ausgangsverbindungen und der genannten Eingangs- und Ausgangsendverbindungen erfolgt.

2. Gruppe von Endschaltungseinheiten nach Anspruch 1, dadurch gekennzeichnet, daß die Nachrichten von einer Steuereinheit (UC) für eine Endschaltungseinheit (UT) von allen Endschaltungseinheiten der Gruppe empfangen werden und daß jede Endschaltungseinheit einen Schaltkreis zur Adressenerkennung (AUT) aufweist, der es dem gewünschten Empfänger der Nachricht ermöglicht, diese in Betracht zu ziehen.

3. Gruppe von Endschaltungseinheiten nach Anspruch 1, dadurch gekennzeichnet, daß die Nachrichten von einer Steuereinheit (UC) für eine Endschaltungseinheit (UT) gleichzeitig auf einem Zeitkanal aller Eingangsverbindungen der Gruppe (GUT) ausgesandt werden und daß jede Endschaltungseinheit Mittel zur Auswahl der Eingangsverbindung besitzt, auf der die Nachricht tatsächlich in Betracht gezogen wird, sowie Auswahlmittel für den Verteilermodul (MD), der tatsächlich von dieser Endschaltungseinheit benutzt wird.

4. Gruppe von Endschaltungseinheiten nach Anspruch 1, mit Endsschaltungseinheiten, die Teilnehmergeräte enthalten, dadurch gekennzeichnet, daß jede Endschaltungseinheit

— eine Raummatrix (XS), die an die Ausgangsendverbindungen (LTS) angeschlossen ist,
— eine Raummatrix (XE), die an die Eingangsendverbindungen (LTE) angeschlossen ist,
— Teilnehmergeräte (EA1 bis EA8), die über Filter (FR) und einen Kodierer-Dekodierer an diese Matrizen angeschlossen sind,
— einen Steuerschaltkreis (RCC), mit dem die Kodierer-Dekodierer mit den Zeitkanälen der Eingangs- und Ausgangsendverbindungen synchronisiert werden können,
— einen Überwachungszähler (CRS), der an den Mikroprozessor für die Verwaltung von Zeitverzögerungen angeschlossen ist, die die Dauer der Nachrichten und die Wartezeit bis zum Empfang von Nachrichten begrenzen, und
— einen Austauschschaltkreis (RCA, REA) aufweist, mit dessen Hilfe die Endschaltungen vom Mikroprozessor (mp) gesteuert werden können.

5. Gruppe von Endschaltungseinheiten nach Anspruch 1 mit einer Hilfs-Endschaltung zum Aussenden und zum Empfang von Vielfrequenzsignalen, dadurch gekennzeichnet, daß sie

— eine Zeitschaltmatrix (MT) und ihren mit dem Mikroprozessor verbundenen Steuerschaltkreis (CMT),
— einen an die Matrix (MT) angeschlossenen Frequenzgenerator (GF),
— einen an die Matrix (MT) angeschlossenen Frequenzempfänger (RF),
— einen Koppler (CP) zur Verbindung zwischen dem Mikroprozessor einerseits und dem Empfänger und dem Generator andererseits,
— und einen Überwachungszähler enthält.

6. Gruppe von Endschaltungseinheiten nach Anspruch 5, dadurch gekennzeichnet, daß der Koppler (CP)

— eine Anzahl von Schieberegistern, die an den Datenbus des Mikroprozessors und an einen Multiplexer (MX) und einen Demultiplexer (DX) angeschlossen sind und Zugang zu den Serienverbindungen in Senderichtung (L1) und Empfangsrichtung (L2) mit dem Generator und dem Empfänger verschaffen,
— und einen Unterbrechungsspeicherschaltkreis (MIN) aufweist, mit dem Unterbrechungsanfragen vom Empfänger an den Mikroprozessor übermittelt werden können, um den Empfänger Vielfrequenzsignale zu übermitteln, die er empfangen hat.

7. Gruppe von Endschaltungseinheiten nach Anspruch 3, dadurch gekennzeichnet, daß jede Endschaltungseinheit die Auswahl der Eingangsverbindung, auf der sie die Nachrichten von der Steuereinheit in Betracht zieht, und die Auswahl des Verteilmoduls mit Hilfe zweiter Zeitverzögerungen verwaltet,

— nämlich einer Zeitverzögerung (T1), deren Überschreiten die völlige Abwesenheit von Nachrichten auf der ausgewählten Eingangsverbindung bedeutet und zu einem Übergang auf eine andere Eingangsverbindung führt,
— und eine längere Zeitverzögerung (T2), als die Zeitverzögerung (T1), die die Abwesenheit von Nachrichten von der Steuereinheit für die Endschaltungseinheit angibt und deren Überschreiten zu einem Kippen führt, wenn ein Fehler in der Nachricht entdeckt worden ist.

**Claims**

1. A group of units of terminals in an automatic exchange central comprising a switching network composed of four independant planes constituted by time switches (CX) controlled by markers (MQ), further comprising units of terminals (UT) organized in groups (GUT) which are connected to the switching network, each unit of terminals comprising a microprocessor (mp) and terminals (T), each constituted by one of the specific equipments of the exchange central, particularly for use in a telephone exchange central by subscriber equipments, line equipments, signalisation equipments and test equipments, further comprising control units (UC) connected to the switching network and performing the control and the management of the units of terminals, and comprising distribution moduls (MD) for the synchronization signals (SY) and the clock signals (H), characterized in that each group (GUT) comprises two clock and synchronization circuits (CBT), each including a time base (BT) connected to a distribution modul (MD), further including a first and a second synchronization circuit (CS1, CS2) each connected to a plane of the switching network by an output link (LS) and to the units of terminals by an input terminal link (LTE), and including a third and a fourth synchronization circuit (CS3, CS4), each connected via an input link (LE) to each one of the planes to which the first and second synchronization circuits are connected, and including an output terminal link (LTS) for the connection with the units of terminals, and that the control of a unit of terminals (UT) by the control unit (UC) is obtained by a message exchange between the microprocessor (mp) of the unit of terminals and the control unit, this message exchange being performed via the switching network according to the semaphore procedure on a time slot of said input and output links and said input and output terminal links.

2. A group of units of terminals according to claim 1, characterized in that the messages from one control unit (UC) to a unit of terminals (UT) are received by all the units of terminals of the group, each unit of terminals comprising an adress identification circuit (AUT) which allows the true receiver of the message to take it into account.

3. A group of units of terminals according to claim 1, characterized in that the messages from a control unit (UC) to a unit of terminals (UT) are transmitted simultaneously on a time slot of each one of the input links of the group (GUT), each unit of terminals comprising means for selecting the input link on which the message is in reality taken into account, and means for selecting the distribution modul (MD) which is effectively used by said unit of terminals.

4. A group of units of terminals according to claim 1, comprising units of terminals for the subscriber equipments, characterized in that each unit of terminals comprises:

- a space matrix (XS) connected to the output terminal links (LTS),
- a space matrix (XE) connected to the input terminal links (LTE),
- subscriber equipments (EA1 to EA8) connected to said matrices via a filter (FR) and a coder-decoder,
- a control circuit (RCC) which is able to synchronize the coders-decoders with the time slots of the input and output terminal links,
- a supervising counter (CRS) connected to the microprocessor in order to manage the time delays restricting the duration of the messages and the duration of waiting for the reception of messages,
- and an exchange circuit (RCA, REA) which is able to control the terminals via the microprocessor (mp).

5. A group of units of terminals according to claim 1, comprising an auxiliary terminal for transmitting and receiving multifrequency signalisations, characterized in that it comprises:

- a time division matrix (MT) and its control circuit (CMT) connected to the microprocessor,
- a frequency generator (GF) connected to the matrix (MT),
- a frequency receiver (RF) connected to the matrix (MT),
- a coupler (CP) for coupling the microprocessor on the one hand and the receiver and the generator on the other hand,
- and a supervising counter.

6. A group of units of terminals according to claim 5, characterized in that the coupler (CP) comprises:

- a shift register assembly connected to the data bus of the microprocessor and to a multiplexer (MX) and a demultiplexer (DX) giving access to emission and reception series lins (L1, L2) in the direction of the generator and of the receiver,
- and a circuit for the interrupt memorization (MIN), which is able to transmit interrupt requests from the receiver to the microprocessor and to transmit thereto the multifrequency signalisation signals which it has recognized.

7. A group of units of terminals according to claim 3, characterized in that each unit of terminals manages the selection of the input link on which the messages from the control units are taken into account, and the selection of distribution module by means of two delays:

- a delay (T1) the passing of which signifies the complete absence of messages on the selected input link and involves the switching over to another input link,
- a longer delay (T2) than the delay (T1) which signifies the absence of messages from the control unit to the unit of terminals and the passing of which involves a switching over, if an error has been detected in a message.

FIG.1
DR1
DR2
RIT1
RIT2
RXD
RXA
BTG
OS1
OS2
OS3
MQ
CX
MD
RR
GUC1
GUC2
UC
AR
AM
CBT
LC
F
UCP1
UCP4
C1
C2
C3
C4
C5
C6
C7
C8
d1
d2
BM
TL1
TL2
TL3
TL4
MOD
LD
UT
GUT1
GUT2
GUTn

FIG. 2

CPU
CM1
CM4
AR
RIT1
RIT2
S-BUS
AM
4MIC

FIG.3

P1
PS1
SY1
P2
SY2
SY3
P3
P4
H1
P5
H2
H3
P6
PS2
B1
DF
I
AF
PA1
PA2
lec
ad
MP
R1
B
PA3
A2
A1
H
SY
D1
D2
Dr

FIG.4
BT
SY
H
SYT
h1
h2
h3
h4
B2
LS
R2
CS1
MR
K
B4
LTE
B3
LS
LTE
CS2
LTS
LE
CS3
LTS
LE
CS4

FIG. 6
LC1
1
F1
2
F2
SYT, h1-h4
LTE-LTS
LC2
CBT
ER
IS
CDX
IT6
X
UT
mp
ECH
T1
T2
M
DA
Tp

FIG.5
UC1
UC2
AM
IT1
IT2
IT3
MIC
RXA
RXB
RXC
RXD
IT6
CBT
1
2
X
ER
mp
UT1
UTr
UTs
UTt
GUT1
GUT2
GUT3

RE
XE
LTE
LTS
RS
XS
H
FR
EA8
EA1
COD8
COD1
RCC
RCA
REA
SYT, h1-h4
REC
IS
ER
R
RC
TD
RD
D
CRS
UC
DA
AUT
RB
REPROM
RAM
V1
Vj
DO
P4
R
P1
mp
P3-P4
RA

FIG.7

FIG.8
DO
V1
Vj
IN
PIC
K
A
S
F1
F2
SY,H
SY,H
HSY
hj
syk
RCX
MIC
INA
mp
INT
K
D
A
BK
BD
BA
CPS
RESET
MT
CMT
ER
RD
TD
REC
GF
CP
DEC
v1
vk
MX
DX
R
MIN
IN
RAM
REPROM
RF
MO
FPB
CL
DE
L1
L2

FIG. 9
ATTENTE MESSAGE
POLL
RACK
ORDRE
MESSAGE A EMETTRE
NON
OUI
FACK
NON
MISE EN FILE DES OCTETS POSSIBLE
OUI
RANGEMENT DU MESSAGE EN FILE EXECUTION
EVENEMENT
ATTENTE RACK
ACK *
POLL
RACK
ORDRE
ATTENTE RACK
EFFACEMENT DU MESSAGE DU BUFFER EMISSION
POLL
RACK
ORDRE
FACK
FACK
ATTENTE MESSAGE

FIG.10

RECEPTION
ADRESSE
NON
ADRESSE =
ADRESSE UT
OUI
FLAG=0
OUI
NON
MESSAGE
CORRECT
OUI
NON
FLAG=0
REARMER T1
REARMER
T1 ET T2
OUI
MESSAGE
CORRECT
NON
3
4
5
BASCULEMENT
PLAN / HORLOGE
REARMER
T1 ET T2
REARMER
T1 ET T2
1
2

FIG. 11

GESTION DE LA LISTE DE POLL
ET DE LA FIN DE CYCLE
(NON DECRIT ICI POUR CLARTE)
POLL
COMPTE _1
ATTENTE
REPONSE
DEBORDEMENT
TEMPORISATION
REPETITION
EVENEMENT
FACK
COMPTE
REPETITION
=0
NON
OUI
"MODE
DISABLE
RACK"
OUI
NON
MISE EN
FILE RECEPTION
POSSIBLE
MISE A L'ARRET
DU CANAL
COMPTE _1
MISE A L'ARRET
DU CANAL
IT DEFAUT
POLL
RACK
IT DE FILE
RECEPTION
PLEINE
ATTENTE
FACK
DEBORDEMENT
TEMPO
REPETITION
FACK
NON
COMPTE
REPETITION
=0
INCREMENTATION
POINTEUR LISTE
POLL
OUI
1
2
FIG.12

# FIG.12

FIG.11
1
2
NON
COMMANDE A EMETTRE
OUI
COMMANDE
COMPTE_1
ATTENTE ACK
DEBORDEMENT TEMPO. REPETITION
FACK
ACK
COMPTE REPETITION =0
NON
RACK
OUI
MISE A L'ARRET DU CANAL
COMPTE_1
ATTENTE FACK
IT DEFAUT COMMANDE
DEBORDEMENT TEMPO. REPETITION
FACK
COMPTE REPETITION =0
NON
INCREMENTATION POINTEUR DE COMMANDE
OUI

FIG. 13

ATTENTE
MESSAGE OU
RACK
DEBORDEMENT
T1
DEBORDEMENT
T2
BASCULEMENT
DE PLAN ET
D'HORLOGE
MISE A 1 DE
L'INDICATEUR
FLAG
ARMEMENT
T1+T2
ARMEMENT
T2